# EUROPEAN PATENT SPECIFICATION

(11) **EP 3 635 988 B1**
(45) Date of publication and mention of the grant of the patent: **23.02.2022**
(21) Application number: 18730421.7
(22) Date of filing: 23.05.2018
(51) Int. Cl.: H04W 12/062, H04W 12/30, H04W 12/04

(54) **IMPROVEMENTS IN AND RELATING TO NETWORK COMMUNICATIONS**
VERBESSERUNGEN VON NETZWERKKOMMUNIKATIONSMITTELN
AMÉLIORATIONS APPORTÉES ET RELATIVES AUX COMMUNICATIONS RÉSEAU

(30) Priority: 23.05.2017 US 201762510022 P
(43) Date of publication of application: 15.04.2020
(73) Proprietor: Global Reach Technology, Inc., San Jose, CA 95119 (US)
(72) Inventor: SPENCER, Christopher, London Greater London WC2B 6PA (GB)
(74) Representative: Appleyard Lees IP LLP
(86) International application number: PCT/GB2018/051410
(87) International publication number: WO 2018/215775

(56) References cited:
- US-A1- 2014 185 597
- US-A1- 2015 264 051
- US-A1- 2016 080 351

## Description

### FIELD

The invention relates to communications networks, such as wireless networks or non-otherwise.

### BACKGROUND

A communications network typically permits users access to it via a network access point, or gateway. In many networks, such as public networks (e.g. the Internet) a user may be required to provide access credentials to the network access point before being permitted to access certain network services/websites etc. Only after these credentials have been verified by an authentication server/software, connected to the access point (or provided within it), is network access granted to the user. A 'captive portal' technique is a common mechanism for implementing a process of authentication for network access control.

Publicly accessible wireless "hotspots" allow members of the public access to network facilities. Hotspots (Wi-Fi) are physical locations where people may obtain Internet access, for example, typically using Wi-Fi technology, by a wireless local area network (WLAN), and are using a rotor to gain access to an Internet service provider. Businesses, such as airport shops or hotels, may typically provide hotspots within the premises for the benefit of their customers, by a local wireless access points (AP) configured to control the degree of Internet access according to the "policy" of the business. The policy may impose restrictions on which parts of the Internet may be accessed, and which parts may not thereby allowing access to only those parts of the Internet consistent with the "policy", the allowed network parts, and preventing access to other parts.

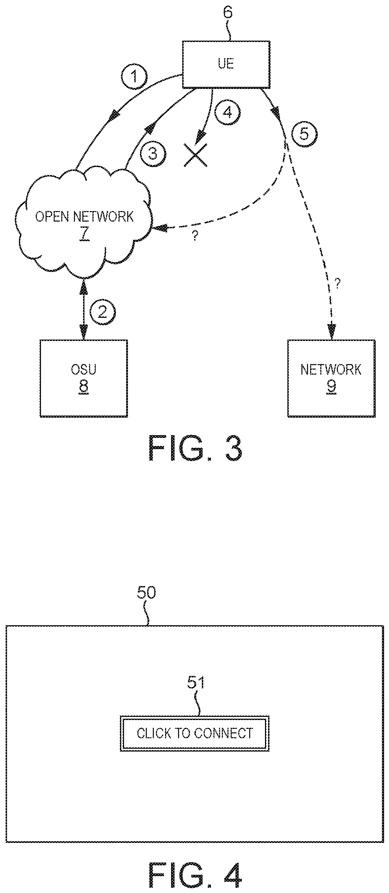

Figure 3 schematically illustrates the procedure via which this control is often achieved. In particular, the wireless local area network apparatus must be able to "provision" the client apparatus (6) of a user (user equipment, UE) with the necessary network access credentials and associated network access "policy". For this purpose, public hotspots often need to allow users access to a registration portal (8) provided by an online sign-up server (OSU). Unfortunately, such access is usually via an insecure open network SSID (7). This means that once a user has taken steps to initiate connection (e.g. clicked a "connect" button on a user interface) to a WLAN, the client apparatus (6) will usually be required to begin transmitting personal registration data (e.g. name, phone number, address, credit card details etc.) to the registration portal (8) via unencrypted wireless channels (1). Once the user equipment (6) has been provisioned (3) with the necessary network access credentials and "policy", registration procedures are completed, and a client apparatus must then disconnect (4) from the insecure open network SSID (7, 8) of the registration portal, and subsequently connect (5) to a separate, secure SSID (9) via which the desired network services (9) are available.

However, this connection step (5) relies on the user equipment (6) finds and connects to the correct secure SSID (9). Unfortunately, a user equipment (6) typically merely remembers and re-connects to the previous open network SSID (7, 8), or is at least slow at finding the secure SSID. This gives a poor service and user experience.

The invention provides an improved system for accessing a communications network. US 2015/264051 A1 discloses automated wireless device provisioning and authentication. US 2016/080351 A1 describes systems and methods for accessing Wi-Fi hotspots by authenticating a device using either an enhanced single SSID method or an enhanced double SSID method. US 2014/185597 A1 discloses secure on-line signup and provisioning of wireless devices.

### SUMMARY

At its most general the invention resides in the idea of providing a user equipment with the facility to present to the user an interface (e.g. GUI) via which the user can deliberately and purposely enter a user input/command which is effective to disassociate the user equipment from the authorisation in response to network access having been authorised e.g. by an AAA server. This facility may be provided to the user equipment by an Online Sign-Up Server (OSU) through which network access was requested. It is to be understood that the user input or command may be a user command which is manually input by a user, such as by clicking a button or item on a user interface to initiate transmission of the user command. Alternatively, the user input or command may be automatically input for the user by the client device by means, for example, of a count-down timer displayed on the user interface whereby the user command is deemed implicitly input at completion of the count-down, in the absence of a user command to the contrary.

In response to the user input, a 'Change of Authorization' (COA) message is generated. The COA is issued to a WLAN via which the network is to be accessed. This has the effect of forcing the user equipment to become disassociated. The user equipment is arranged subsequently to attempt to reconnect to the service set (e.g. defined by an SSID) from which it may have been disconnected as a result of the disassociation (i.e. caused by the COA message). The user equipment is arranged to use the credentials previously issued by the AAA server immediately prior to disassociation, when attempting this reconnection (i.e. via the AAA server). The AAA server may be arranged to respond to the reconnection attempt of the user equipment by issuing to the user equipment an 'Access Accept' message - i.e. because the previously issued credentials remain valid. The AAA server's response may also include a VLAN attribute. The AAA server's response may also include other required RADIUS attributes. As a result of this, the user equipment acquires the appropriate network access as granted and enforced by the policy associated with those user credentials. User traffic may be tagged to an authorised VLAN.

Disassociation may be implemented by, for example, transmitting a 'disassociation frame'. This may involve sending a disassociation frame to terminate the association of the user equipment from the network connection. For example, a disassociation frame may alert an access point or other network node, which may then remove the user equipment from an association table.

In a first aspect, the invention may provide a method for authenticating a client device in a communications network as defined by claim 1 of the claims appended hereto.

Desirably, in response to receipt of the temporary network access credentials by the authentication server apparatus, the method may include receiving at the client device an access accept transmitted from the authentication server apparatus permitting said connecting the client device to the segregated part of the communications network.

Desirably, the disassociating the client device from the network includes disconnecting the client device from the segregated part of the communications network.

Desirably, the network access credentials include a personalised username and password for accessing the communications network.

In a second aspect, the invention may provide a network communications apparatus for authenticating a client device in a communications network as defined by claim 5 of the claims appended hereto.

Desirably, the disassociating the client device from the network includes disconnecting the client device from the segregated part of the communications network. The request to reconnect is made to the apparatus having the same service set identification (SSID) as the apparatus from which the client apparatus had been dissociated by said disassociating the client device from the network. Desirably, the client device is arranged to receive the replacement network access credentials which include a personalised username and password for accessing the communications network. A service set identifier (SSID) refers to an identifier data item, used as an identifier for a WLAN (wireless LAN). In computer networking, a service set (SS) is a set consisting of all the devices associated with a consumer or enterprise wireless local area network (WLAN) - e.g. IEEE 802.11. The service set can be local, independent, extended or mesh. A LAN is an abbreviation for local area network. A virtual LAN (VLAN) is any broadcast domain that is partitioned and isolated in a computer network at the data link layer. The term 'virtual' refers to a physical object recreated and altered by additional logic. VLANs employ tags within network packets and tag handling in networking systems. As a consequence a VLAN may allow networks to be kept separate despite being connected to the same network. It does so without requiring multiple sets of networking devices to be deployed. This recreates the appearance and functionality of network traffic that is physically on a single network but acts as if it is split between separate networks.

### BRIEF DESCRIPTION OF DRAWINGS

Fig.1 schematically describes the components of an apparatus, and associated process steps, for allowing a user equipment (UE) to gain access to a network (e.g. the internet);
Fig.2 schematically illustrates a sequence of communications between a user equipment (UE) of a client and a WLAN network according to an embodiment of the invention;
Fig.3 schematically illustrates connections in the registration process in connecting to a Wi-Fi hotspot;
Fig.4 schematically shows a display of the user equipment (UE) including a user interface displaying a button to be clicked to input to the client device a user command to connect the client device to the WLAN communications network.

### DESCRIPTION OF EMBODIMENTS

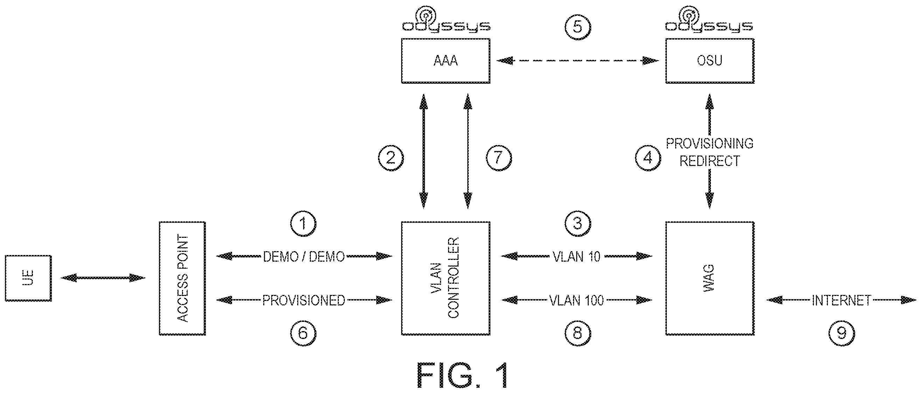

An embodiment of the invention, shall now be described with reference to Fig.1. This is provided for illustration to allow a better understanding of the invention and is not intended to be limiting. Fig.1 shows apparatus comprising the following components: A User Equipment 'UE', such as a client device (laptop etc.);An 'ACCESS POINT' (or AP) via which the 'UE' accesses the internet; A 'WLAN CONTROLLER' in communication with the AP, and with an Authentication, Authorisation and Accounting server 'AAA', and a 'WAG' apparatus. The 'AAA' server is in communication with an 'OSU' server which is itself in communication with the 'WAG' apparatus.

These components of apparatus communicate as described below in steps (1) to (8) with reference to Fig.1 and the communication arrows indicated therein with these process steps. Hot Spot 2.0 is a standard for public-access Wi-Fi that enables roaming among WiFi networks and

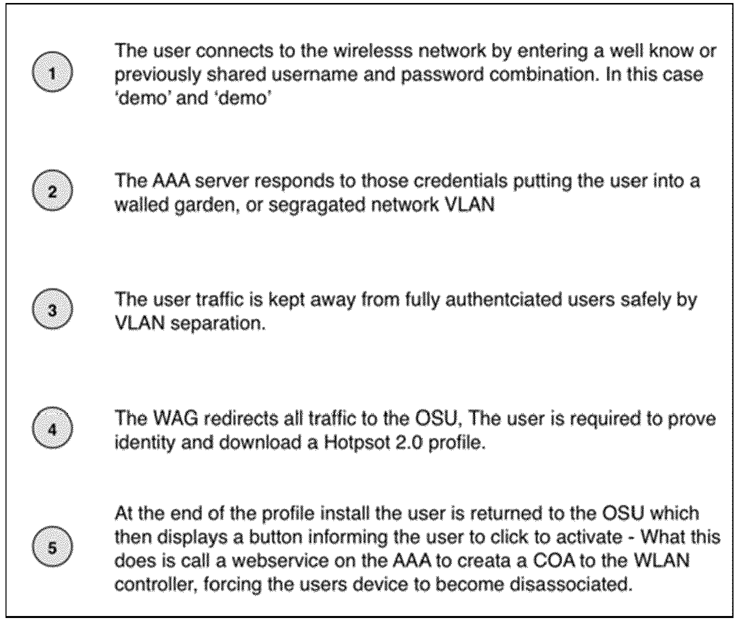

between WiFi and cellular networks. It was developed by the Wi-Fi Alliance and the Wireless Broadband Association.

The user equipment 'UE' is now disassociated from the network (e.g. internet). The following steps then take place:

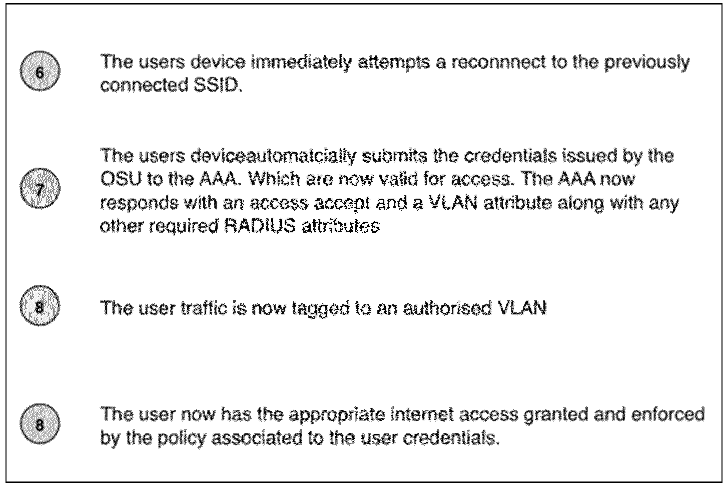

Thus, a user-initiated COA step (5), shown in Fig.1, is indicated by the dotted line between 'AAA' unit and the 'OSU' unit. The user initiated COA is different to a process of a user simply e.g. logging out of Wi-Fi. The difference includes the step of sending a COA to the controller to initiate the 'WLAN CONTROLLER' thereby pushing the client device 'UE' off the Access Point 'AP'. A key principle is that the user initiates this. That is to say, the user takes an active step to be pushed off the network, with that outcome intended.

The RADIUS protocol (Remote Authentication Dial In User Service) is an industry standard protocol for authentication, authorization, and accounting (AAA). RADIUS is often the backend of choice for 802.1X authentication. Terminal servers or Network Access Server (NAS) use the RADIUS protocol to communicate AAA requests to, and return results from, a database of customer information. The RADIUS protocol may be defined in Internet Engineering Task Force (IETF) "RFC" documents, such as RFC 2058 and any one or more of the subsequent RFC documents which have obsoleted RFC 2058 and/or have themselves been obsoleted by successive RFC documents defining the RADIUS protocol (or aspects of it), such as any one of, or a combination of, RFC 3579, RFC 2866 and RFC 3580 or may be used RFC 6614 for example.

A RADIUS server uses the RADIUS protocol to provide AAA services. A RADIUS server performs AAA services required when customers use a terminal server or Network Access Server (NAS). The RADIUS server performs the following tasks:
- Authentication: Verifying a customers identity by checking the user name and password
- Authorization: Verifying a customers privileges for accessing the requested services
- Accounting: Tracking when customers log in and log out, and the duration of the sessions.

The term "Accounting" refers to tracking customer usage.

A common authentication tool is to use a so-called "captive portal". A captive portal uses a standard web browser to permit a user the opportunity to present login details/credentials to a network service, before access to that service is granted. The use of a web browser in this way means that many personal computer operating systems (laptops, PCs etc.) can support captive portals, and bespoke software is not required.

When a RADIUS server is used for authentication purposes, it may return one of two responses to the network access point: an 'Access Reject' response; or an 'Access Accept' response. An 'Access Reject' response occurs to deny access to the requested network resources if the user has failed to provide acceptable credentials. An 'Access Accept' response occurs when a user is granted access.

An 'ACCESS POINT' sends a RADIUS Access Request message to the RADIUS server ('AAA'), via the 'WLAN CONTROLLER' requesting authorization to grant access via the RADIUS protocol. This request includes access credentials (e.g. username, password or security certificate) provided by the client device/user. The RADIUS server ('AAA') checks that the information is correct.

Presently, network operators wishing to offer a more secure approach to sign-up and registrations to a network can thereby create a secure encrypted Wireless (Wi-Fi) network, e.g. using a variety of EAP protocols (Extensible Authentication Protocol) or Hotspot 2.0 protocols. However, as discussed above with reference to Fig.3, the problem with existing systems is that no user can connect to that secure SSID without knowing their own secure authentication details, such as a username and password or have a Hotspot 2.0 profile installed on their device already. In principle, the network owner in that case may openly advertise a temporary username/password that anyone could use to connect to the network securely, however a shared username and password does not allow them to differentiate the service from another network service (e.g. identify users and provide bespoke services) or allow user registration.

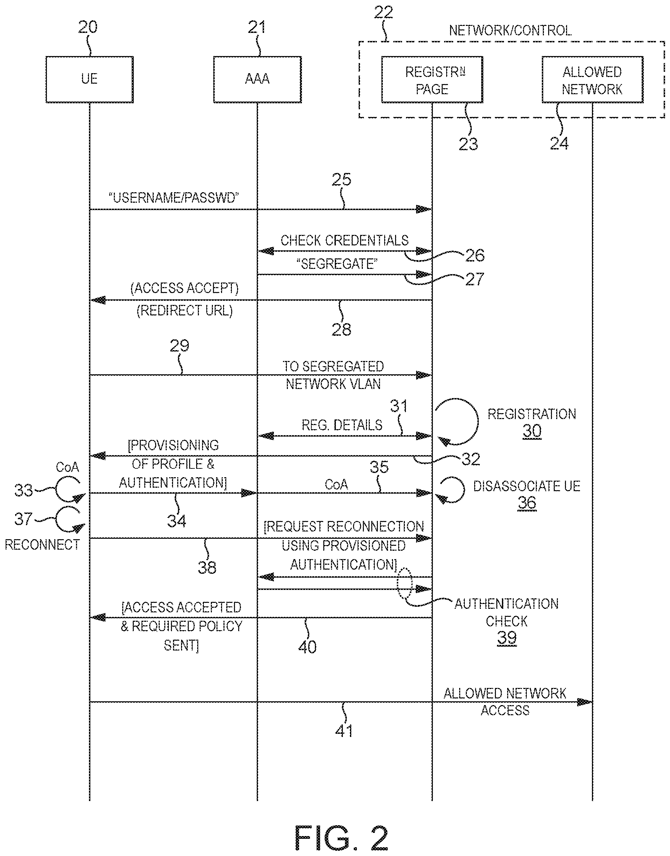

The present invention provides the required provisioning of users securely. Referring to Fig.2, the user equipment (UE, 20) attempts to connect to a secure SSID of a network (22) comprising network access and control apparatus such as shown in Fig.1. The user is prompted by the operating system of the UE to enter a username and password to gain access to the encrypted network. The user has previously been provided with a temporary username and password, and they enter (25) these at a registration page of the network. The temporary username and password maybe provided to the user by the network apparatus using shared means, for example on a website associated with the network service, or in an email to the user or to a third party (e.g. a friend) then may convey the information to the user.

For example, the user may have obtained the username/password combination from their mobile telephone service provider ('MobileCo'). The user is provided with a temporary username of 'mobileco' and a temporary password of 'mobileco'. The user is thereby able to enter (25) the temporary username 'mobileco' and associated temporary password 'mobileco' to the registration page (23) of the network (22). This temporary username and password is sent (26), by the network control apparatus, back to the AAA Radius server (21) of the network for validation. The AAA Radius server responds (27) with an access accept because the temporary username and password are correct in this case, together with a notification (27) to the network control apparatus (23) to segregate the user equipment (20) within a predefined, secure restricted/segregated area of the network. The network control apparatus associated with the registration page (23) is responsive to the AAA server to issue (28) to the user equipment (20) not only an access accept message, but also a redirect URL and/or a VLAN ID and/or policy which is operable to direct the user equipment to a the secure, segregated area of the network.

The user is then connected (29) to the segregated part of the Wi-Fi network (22) securely and their data in air is encrypted. However, because they used the 'well know username and password', the user equipment is redirected (30) to the MobileCo's registration page instead of granted full internet access. At the registration page the user must complete their registration or activation (31), and may typically be required to enter their mobile phone number or email address. Once a user's identity has been proved, then a AAA profile is created and a secure mobile profile is generated for their device, presented and installed over the air securely (32). This is a secure process of provisioning a profile and authentication credentials to the user apparatus.

The provisioned/installed profile now contains the user's personalised username/password along with other items required to connect to the allowed part (24) of the secure network. For example, the provisioned profile could contain the correct Hotspot 2.0 setting and profile. The user equipment (20) has now obtained the correct username and password in the downloaded profile but still stuck on the restricted access network associated with the registration page (23) because they provisionally authenticated with the temporary/shared username and password. In order to resolve this problem, a display (Fig.4) on the user equipment (20) is controlled to display to the user a connection activation button which they are prompted to click, as an active user input/command (33), to implement connection to the desired/allowed network area (24). Fig.4 schematically shows an example of a user interface on a display (50) of the client device displaying such an activation button (51) to be clicked to input the user command to connect the client device to the WLAN communications network. The activation button displays a message "click to connect" indicating the action required by the user to complete connection to the allowed network. Once clicked, the client device has thereby received the user input command and in response thereto the process of disassociating the client device from the network ensues. Alternatively, a connection activation count-down timer may be displayed and the user equipment controlled to implement connection to the desired/allowed network area upon completion of the count-down, in the absence of a user input/command to the contrary. In that case, the activation button (51) of the user interface displayed on the display (50) of the client device (UE) would be replaced by a count-down timer displaying a counting-down time, in place of the "click to connect" message shown in Fig.4.

The input of a user input/command by the connection activation button or via the counter-downtime, automatically triggers a backend CoA signal (34, 35) to the WLAN controller of the network control apparatus (22) creating a temporary dis-association between the user equipment (20) and the WLAN of the network control apparatus. The user equipment is thereby disconnected (36) from the network control apparatus.

Because the user equipment (20) has previously been provisioned (32) with the correct network profile containing the generated personalised username and password or authentication token, the user equipment is able and arranged to automatically reconnect (38) back to the same WLAN of the network control apparatus (22), this time using the personalised username and password contained in the profile, instead of the temporary username/password. Once validated (39) by the AAA (RADIUS) server (21), the network control apparatus is arranged to send back (40) an access accept message to the user equipment containing the correct policy allowing the user equipment to connect using their allowed internet or network access (41).

The benefits of this arrangement include that all of the registration, authentication and connection of the user equipment to the network is performed on a single secure WLAN. Additionally, the single WLAN network can support multiple operators and each operator would make their own subscriber base aware of their own shared username and password, for example another operator called MobileCo2 with username and password of mobileco2, may provide that temporary username/password combination to their customers to separately and independently implement network connection to an allowed network area associated with MobileCo2. The AAA server (21) would see this username and password and respond putting the UE into a restricted state as described above but redirecting them to MobileCo2's provisioning page.

The invention has multiple benefits, including that every aspect of the sign-up process is done with in air encryption, and is therefore secure. A single SSID, associated with the network control apparatus (22), is used by mobile operators, and this avoids mobile operators having to use a large number of SSIDs which would cause RF (radio frequency) pollution. The invention also prevents user equipment (e.g. mobile handsets) unintentionally reconnecting to the first/initial open SSID they registered with - a current and significant Hotspot 2.0 provisioning problem. Overall the invention enables a better user experience.

## Claims

1. A method for authenticating a client device in a communications network, including:
providing to the client device temporary network access credentials associated with the communications network and comprising a temporary username and password;
transmitting (25) by the client device the temporary network access credentials to an authentication server apparatus for the communications network by entering the temporary network access credentials at a registration page of the communications network;
in response to receipt of the temporary network access credentials by the authentication server apparatus, connecting (29) the client device to a segregated part of the communications network for encrypted communications therewith;
transmitting user registration data (31) from the client device to the segregated part of the communications network by said encrypted communications;
obtaining network access credentials (32) by the client device from said authentication server apparatus by said encrypted communications;
after the obtaining of the network access credentials, displaying on the client device a user interface arranged for receiving a user input command to connect the client device to the communications network;
receiving the user input command to connect the client device to the communications network (33) at the client device and in response thereto the authentication server apparatus issuing (35) a Change of Authorisation, CoA, signal to a Wireless Local Area Network, WLAN, controller in communication with the authentication server apparatus to disassociate (36) the client device from the segregated part of the communications network;
transmitting the network access credentials (38, 39) by the client device to the authentication server apparatus which is responsive thereto to transmit to the client device an access accept message (39, 40), wherein the transmitting of the network access credentials includes transmitting (38) from the client device a request to reconnect to the communications network from which the client device had been disassociated by said disassociating the client device from the network, and
wherein said request to reconnect is made using a same service set identification, SSID, as used to connect the client device to the segregated part of the communications network.

2. A method according to claim 1 wherein, in response to receipt of the temporary network access credentials by the authentication server apparatus:
receiving (27) at the client device an access accept transmitted from the authentication server apparatus permitting said connecting the client device to the segregated part of the communications network.

3. A method according to any preceding claim, wherein the disassociating (36) the client device from the segregated part of the network includes disconnecting the client device from the segregated part of the communications network.

4. A method according to any preceding claim, in which the network access credentials include a personalised username and password for accessing the communications network.

5. A system adapted to allow a client device (20) to access a communications network, the system comprising an authentication server apparatus (22) configured to execute steps performed by the authentication server apparatus according to the method of claim 1, and wherein the client device is configured to execute steps performed by the client device according to the method of claim 1.

## Patentansprüche

1. Verfahren zum Authentifizieren einer Client-Vorrichtung in einem Kommunikationsnetzwerk, beinhaltend:
Liefern, an die Client-Vorrichtung, von temporären Netzwerkzugriff-Berechtigungsnachweisen, die mit dem Kommunikationsnetzwerk assoziiert sind und einen temporären Benutzernamen und ein temporäres Passwort umfassen;
Übertragen (25), durch die Client-Vorrichtung, der temporären Netzwerkzugriff-Berechtigungsnachweise an eine Authentifizierungsservereinrichtung für das Kommunikationsnetzwerk durch Eingeben der temporären Netzwerkzugriff-Berechtigungsnachweise an einer Registrierungsseite des Kommunikationsnetzwerks;
als Reaktion auf Empfang der temporären Netzwerkzugriff-Berechtigungsnachweise durch die Authentifizierungsservereinrichtung, Verbinden (29) der Client-Vorrichtung mit einem abgesonderten Teil des Kommunikationsnetzwerks für verschlüsselte Kommunikation zwischen diesen;
Übertragen von Benutzerregistrierungsdaten (31) von der Client-Vorrichtung an den abgesonderten Teil des Kommunikationsnetzwerks durch die verschlüsselte Kommunikation;
Erhalten von Netzwerkzugriff-Berechtigungsnachweisen (32) durch die Client-Vorrichtung von der Authentifizierungsservereinrichtung durch die verschlüsselte Kommunikation;
nach dem Erhalten der Netzwerkzugriff-Berechtigungsnachweise, Anzeigen, auf der Client-Vorrichtung, einer Benutzerschnittstelle, die eingerichtet ist zum Empfangen eines Benutzereingabebefehls zum Verbinden der Client-Vorrichtung mit dem Kommunikationsnetzwerk;
Empfangen des Benutzereingabebefehls zum Verbinden der Client-Vorrichtung mit dem Kommunikationsnetzwerk (33) an der Client-Vorrichtung und, als Reaktion darauf, gibt die Authentifizierungsservereinrichtung ein Autorisierungsänderung-Signal bzw. CoA-Signal an einen Controller eines drahtlosen lokalen Netzwerks bzw. einen WLAN-Controller, der sich in Kommunikation mit der Authentifizierungsservereinrichtung befindet, heraus (35), die Client-Vorrichtung von dem abgesonderten Teil des Kommunikationsnetzwerks abzulösen (36);
Übertragen der Netzwerkzugriff-Berechtigungsnachweise (38, 39) durch die Client-Vorrichtung an die Authentifizierungsservereinrichtung, die darauf reagiert mit Übertragen einer Zugriffakzeptanznachricht (39, 40) an die Client-Vorrichtung, wobei das Übertragen der Netzwerkzugriff-Berechtigungsnachweise Übertragen (38), von der Client-Vorrichtung, einer Anforderung zum Wiederverbinden mit dem Kommunikationsnetzwerk, von dem die Client-Vorrichtung durch das Ablösen der Client-Vorrichtung von dem Netzwerk abgelöst wurde, beinhaltet, und
wobei die Anforderung zum Wiederverbinden unter Verwendung einer selben Service-Set-Kennung, SSID, wie sie zum Verbinden der Client-Vorrichtung mit dem abgesonderten Teil des Kommunikationsnetzwerks verwendet wurde, vorgenommen wird.

2. Verfahren nach Anspruch 1, wobei, als Reaktion auf Empfang der temporären Netzwerkzugriff-Berechtigungsnachweise durch die Authentifizierungsservereinrichtung, Folgendes vorgenommen wird:
Empfangen (27), an der Client-Vorrichtung, einer Zugriffsakzeptanz, übertragen von der Authentifizierungsservereinrichtung, die das Verbinden der Client-Vorrichtung mit dem abgesonderten Teil des Kommunikationsnetzwerks erlaubt.

3. Verfahren nach einem der vorhergehenden Ansprüche, wobei das Ablösen (36) der Client-Vorrichtung von dem abgesonderten Teil des Kommunikationsnetzwerks Trennen der Client-Vorrichtung von dem abgesonderten Teil des Kommunikationsnetzwerks beinhaltet.

4. Verfahren nach einem der vorhergehenden Ansprüche, in dem die Netzwerkzugriff-Berechtigungsnachweise einen personalisierten Benutzernamen und ein personalisiertes Passwort zum Zugreifen auf das Kommunikationsnetzwerk beinhalten.

5. System, eingerichtet zum Zulassen, dass eine Client-Vorrichtung (20) auf ein Kommunikationsnetzwerk zugreift, wobei das System eine Authentifizierungsservereinrichtung (22) umfasst, die ausgelegt ist zum Ausführen der Schritte, die durch die Authentifizierungsservereinrichtung gemäß dem Verfahren nach Anspruch 1 durchgeführt werden, und wobei die Client-Vorrichtung ausgelegt ist zum Ausführen der Schritte, die durch die Client-Vorrichtung gemäß dem Verfahren nach Anspruch 1 durchgeführt werden.

## Revendications

1. Procédé d'authentification d'un dispositif client dans un réseau de communication, comportant :
la fourniture au dispositif client de justificatifs d'accès réseau temporaires associés au réseau de communication et comprenant un nom d'utilisateur et mot de passe temporaires ;
la transmission (25) par le dispositif client des justificatifs d'accès réseau temporaires à un appareil serveur d'authentification du réseau de communication en entrant les justificatifs d'accès réseau temporaires au niveau de la page d'enregistrement du réseau de communication ;
en réponse à la réception des justificatifs d'accès réseau temporaires par l'appareil serveur d'authentification, la connexion (29) du dispositif client à une partie séparée du réseau de communication pour des communications cryptées avec celui-ci ;
la transmission de données d'enregistrement de l'utilisateur (31) à partir du dispositif client à la partie séparée du réseau de communication par lesdites communications cryptées ;
l'obtention de justificatifs d'accès réseau (32) par le dispositif client à partir dudit appareil serveur d'authentification par lesdites communications cryptées ;
après l'obtention des justificatifs d'accès réseau, l'affichage sur le dispositif client d'une interface utilisateur conçue pour recevoir une commande d'entrée utilisateur pour connecter le dispositif client au réseau de communication ;
la réception de la commande d'entrée utilisateur pour connecter le dispositif client au réseau de communication (33) au niveau du dispositif client et, en réponse à celle-ci, l'émission (35) par l'appareil serveur d'authentification d'un signal de changement d'autorisation, CoA, à un contrôleur de réseau local sans fil, WLAN, en communication avec l'appareil serveur d'authentification pour dissocier (36) le dispositif client de la partie séparée du réseau de communication ;
la transmission des justificatifs d'accès réseau (38, 39) par le dispositif client à l'appareil serveur d'authentification qui y répond en transmettant au dispositif client un message d'acceptation d'accès (39, 40), dans lequel la transmission des justificatifs d'accès réseau comporte la transmission (38) à partir du dispositif client d'une demande de reconnexion au réseau de communication duquel le dispositif client avait été dissocié par ladite dissociation du dispositif client du réseau, et
dans lequel ladite demande de reconnexion est effectuée en utilisant une même identification d'ensemble de services, SSID, que celle utilisée pour connecter le dispositif client à la partie séparée du réseau de communication.

2. Procédé selon la revendication 1 comprenant, en réponse à la réception des justificatifs d'accès réseau temporaires par l'appareil serveur d'authentification :
la réception (27) au niveau du dispositif client d'une acceptation d'accès transmise à partir de l'appareil serveur d'authentification permettant ladite connexion du dispositif client à la partie séparée du réseau de communication.

3. Procédé selon n'importe quelle revendication précédente, dans lequel la dissociation (36) du dispositif client de la partie séparée du réseau comporte la déconnexion du dispositif client de la partie séparée du réseau de communication.

4. Procédé selon n'importe quelle revendication précédente, dans lequel les justificatifs d'accès réseau comportent un nom d'utilisateur et un mot de passe personnalisés pour accéder au réseau de communication.

5. Système adapté pour permettre à un dispositif client (20) d'accéder à un réseau de communication, le système comprenant un appareil serveur d'authentification (22) configuré pour exécuter des étapes réalisées par l'appareil serveur d'authentification selon le procédé de revendication 1, et dans lequel le dispositif client est configuré pour exécuter les étapes réalisées par le dispositif client selon le procédé de la revendication 1.
